# EUROPÄISCHE PATENTANMELDUNG

(11) **EP 0 923 189 A2**
(43) Veröffentlichungstag der Anmeldung: **16.06.1999**
(21) Anmeldenummer: 98204109.7
(22) Anmeldetag: 03.12.1998
(51) Int. Cl.: H02M 3/28

(54) **Spannungskonverter**

(30) Priorität: 10.12.1997 DE 19754846
(71) Anmelder: Philips Patentverwaltung GmbH, 22335 Hamburg (DE); Koninklijke Philips Electronics N.V., 5621 BA Eindhoven (NL)
(72) Erfinder: Raets, Hubert, 6373 AJ Landgraaf (NL)
(74) Vertreter: Peters, Carl Heinrich, Dipl.-Ing.

(57) **Zusammenfassung**

Beschrieben wird ein Spannungskonverter zum Konvertieren einer Eingangsspannung in wenigstens zwei Ausgangsspannungen, umfassend
- einen Eingangsresonanzkreis, in den eine Primärwicklung eines Transformators einbezogen ist und dem die Eingangsspannung in periodisch wiederkehrenden Zeitintervallen zuführbar ist,
- wenigstens zwei Ausgangskreise, in die je eine Sekundärwicklung oder ein Teil einer Sekundärwicklung des Transformators einbezogen ist und denen je eine der Ausgangsspannungen entnehmbar ist, wobei
   -- eine von einem ersten der Ausgangskreise gelieferte erste der Ausgangsspannungen eine Hochspannung und die übrige(n) Ausgangsspannung(en) (eine) demgegenüber niedrige Spannung(en) bildet (bzw. bilden),
   -- wenigstens (einer) der die übrige(n) Ausgangsspannung(en) liefernde(n) übrige(n) Ausgangskreis(e) eine Gleichrichteranordnung zum Liefern einer Gleichspannung als Ausgangsspannung aufweist.

Um einen solchen Spannungskonverter mit mehreren Ausgängen derart auszubilden, daß ein verbesserter Gleichlauf der Ausgangsspannungen, d.h. eine verringerte "Crossregulation", als in herkömmlicher Weise erreichbar erzielt wird, wird erfindungsgemäß eine der folgenden Maßnahmen vorgeschlagen:
1.) (je) eine zusätzliche Kapazität parallel zur Sekundärwicklung des Transformators in dem (bzw. den) die Gleichrichteranordnung(en) aufweisenden übrigen Ausgangskreis(en), wobei die zusätzliche(n) Kapazität(en) derart bemessen ist (bzw. sind), daß ihr(e) auf die Primärseite des Transformators transformierter Wert (bzw. transformierten Werte in Summe) im wesentlichen mit dem auf die Primärseite transformierten Wert einer Parallelkapazität der Sekundärwicklung des Transformators aus dem ersten Ausgangskreis übereinstimmt,
2.) (je) einen Hilfskreis in dem (bzw. den) die Gleichrichteranordnung(en) aufweisenden übrigen Ausgangskreis(en), wobei
   - jeder Hilfskreis eine zusätzliche Sekundärwicklung des Transformators umfaßt, die mit einem zusätzlichen Kondensator und einer zusätzlichen Gleichrichteranordnung in einer Reihenschaltung angeordnet ist und
   - diese Reihenschaltung parallel zu einem Zweig der Gleichrichteranordnung des betreffenden Ausgangskreises sowie einer mit diesem verbundenen Last angeordnet ist.

## Beschreibung

Die Erfindung bezieht sich auf einen Spannungskonverter zum Konvertieren einer Eingangsspannung in wenigstens zwei Ausgangsspannungen, umfassend
- einen Eingangsresonanzkreis, in den eine Primärwicklung eines Transformators einbezogen ist und dem die Eingangsspannung in periodisch wiederkehrenden Zeitintervallen zuführbar ist,
- wenigstens zwei Ausgangskreise, in die je eine Sekundärwicklung oder ein Teil einer Sekundärwicklung des Transformators einbezogen ist und denen je eine der Ausgangsspannungen entnehmbar ist, wobei
   -- eine von einem ersten der Ausgangskreise gelieferte erste der Ausgangsspannungen eine Hochspannung und die übrige(n) Ausgangsspannung(en) (eine) demgegenüber niedrige Spannung(en) bildet (bzw. bilden),
   -- wenigstens (einer) der die übrige(n) Ausgangsspannung(en) liefernde(n) übrige(n) Ausgangskreis(e) eine Gleichrichteranordnung zum Liefern einer Gleichspannung als Ausgangsspannung aufweist.

Aus der deutschen Offenlegungsschrift DE 195 29 941 A1 ist ein Spannungskonverter zur Konvertierung einer Eingangswechselspannung in eine hohe Gleichspannung sowie weitere Versorgungs-Gleichspannungen bekannt. Darin wird die dem Konverter eingangsseitig zugeführte Wechselspannung einer Gleichrichteranordnung zugeführt, deren Ausgangssignal auf zwei hintereinander geschaltete elektronische Schalter geführt ist. Parallel zu einem der elektronischen Schalter ist eine Reihenschaltung aus einer Kapazität, einer Induktivität und einer Primärwicklung eines Transformators geschaltet. Einer Sekundärwicklung des Transformators ist eine ausgangsseitige Kapazität nachgeschaltet. Es ist eine Steuerschaltung vorgesehen, die die Schaltfrequenz der elektronischen Schalter so steuert, daß über der ausgangsseitigen Kapazität eine Gleichspannung gewünschter Höhe abfällt. An dem Transformator sind zusätzliche sekundärseitige Anzapfungen vorgesehen, denen die weiteren Versorgungs-Gleichspannungen über Schaltungsanordnungen zur Spannungsstabilisierung entnehmbar sind.

Ist bei einem derartigen Spannungskonverter der erstgenannte Ausgang ein Hochspannungsausgang, der eine gegenüber der eingangsseitig zugeführten Wechselspannung bzw. gegenüber der daraus durch die Gleichrichteranordnung gewonnenen, auf die elektronischen Schalter geführten Gleichspannung bedeutend höhere Ausgangsgleichspannung liefert, und sind ferner die weiteren Versorgungs-Gleichspannungen demgegenüber als Niederspannungsausgänge ausgebildet, wird wegen des dann gewählten höheren Übersetzungsverhältnisses zwischen der Primärwicklung und der Sekundärwicklung des Transformators die ausgangsseitige Kapazität, die eine Parallelkapazität des sogenannten Hochspannungsausgangs des Spannungskonverters bildet, das Betriebsverhalten dieses Spannungskonverters entscheidend bestimmen, da sie zur Primärseite des Transformators mit eben diesem hohen Übersetzungsverhältnis auf einen im Verhältnis hohen Wert transformiert wird. Dagegen haben vergleichbar dimensionierte Parallelkapazitäten an den zusätzlichen sekundärseitigen Anzapfungen, die Niederspannungsausgänge des Spannungskonverters für die vergleichsweise niedrigen weiteren Versorgungs-Gleichspannungen bilden, nur einen geringen Einfluß zur Primärseite des Transformators, da sie entsprechend nur mit den niedrigeren Übersetzungsverhältnissen zur Primärseite transformiert werden.

Es zeigt sich, daß bei üblicher Auslegung eines derartigen Spannungskonverters die Parallelkapazität des Hochspannungsausgangs selbst dann noch einen deutlichen, überwiegenden Einfluß auf der Primärseite des Transformators ausübt, wenn sie nicht durch ein zusätzliches Bauelement, sondern nur noch durch die parasitäre Wicklungskapazität der Sekundärwicklung gebildet ist.

Demgegenüber ist die Wirkung parasitärer Wicklungskapazitäten aus den Sekundärwicklungen bzw. den Teilen der Sekundärwicklung, die mit den Anzapfungen für die weiteren Versorgungs-Gleichspannungen verbunden sind, transformiert auf die Primärseite des Transformators vernachlässigbar gering.

Bei einem Spannungskonverter der vorstehend beschriebenen Art tritt bei Belastung der verschiedenen Sekundärwicklungen bzw. Anzapfungen, d.h. bei Entnahme elektrischer Leistung über die Hochspannung bzw. die weiteren Versorgungs-Gleichspannungen, eine gegenseitige Beeinflussung auf, die als "Crossregulation" bezeichnet wird und die sich dadurch bemerkbar macht, daß die Ausgangsspannungen, d.h. die Hochspannung und die weiteren Versorgungs-Gleichspannungen, nicht allein abhängig sind von ihrem gegenseitigen Verhältnis der Windungszahlen der Sekundärwicklungen bzw. der Teile der Sekundärwicklung, sondern auch von ihrer jeweiligen Belastung. Das bedeutet, daß trotz Regelung einer der Gleichspannungen auf einen festen Wert bei den anderen Gleichspannungen Schwankungen auftreten, die von den Belastungen der Ausgänge abhängig sind.

Zwar kann versucht werden, diese Schwankungen zu begrenzen, indem die Streuinduktivitäten der Sekundärwicklungen bzw. der Teile der Sekundärwicklung des Transformators so weit wie möglich verringert werden. Dem sind jedoch Grenzen gesetzt, insbesondere durch die Formgebung des Kerns und des Spulenkörpers des Transformators, durch die Anforderung an eine Spannungsisolierung der einzelnen Wicklungen des Transformators gegeneinander und durch die Mindestanzahl der Windungen der einzelnen Wicklungen, die unter anderem durch die höchst zulässige magnetische Induktion im Kern bestimmt wird. In der Praxis führt dies dazu, daß für bestimmte Anwendungen der beschriebenen Spannungskonverter und die dafür benötigte Auslegung des Transformators die zugleich gestellten Anforderungen an einen Gleichlauf der sekundärseitig abgegebenen Spannungen nicht erfüllt werden können. Das bedeutet, daß die sogenannte Crossregulation bei solchen Spannungskonvertern nicht im vorgeschriebenen Rahmen gehalten werden kann und dadurch der Spannungskonverter der beschriebenen Art für die genannte Anwendung nicht brauchbar ist.

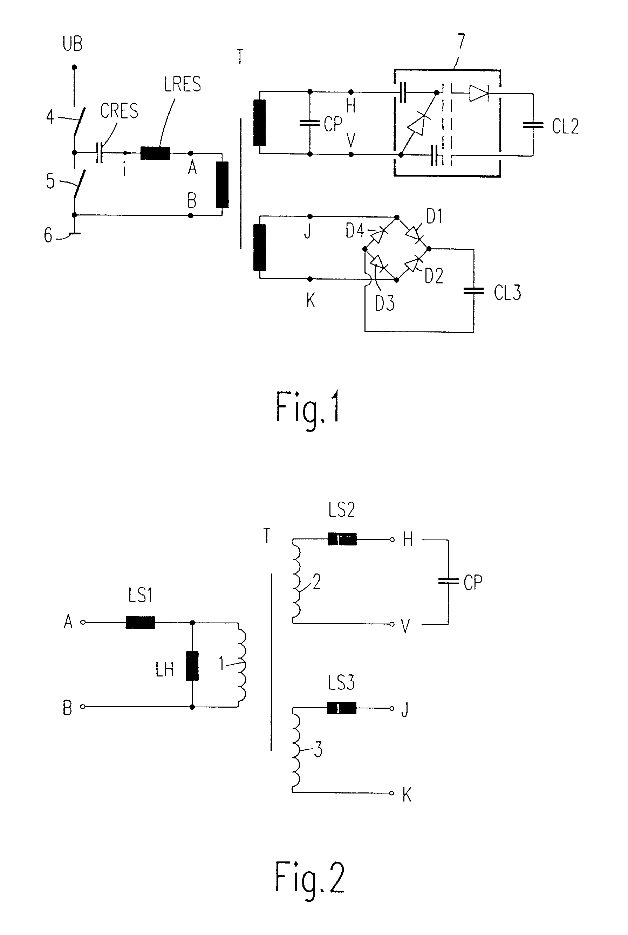

Fig. 1 zeigt zur näheren Erläuterung des Problems der "Crossregulation" einen Spannungskonverter zum Konvertieren einer Eingangsspannung UB in eine hohe Gleichspannung und eine weitere Versorgungsspannung. Dieser Spannungskonverter enthält zwei in Reihe angeordnete Schalter 4, 5, die als Zerhackerschalter zwischen der Eingangsspannung UB und Masse 6 wechselweise periodisch leitend und gesperrt geschaltet werden. Parallel zum zweiten dieser Schalter mit dem Bezugszeichen 5 ist die Reihenschaltung aus einer Resonanzkapazität CRES, einer Resonanzinduktivität LRES und der Primärwicklung eines Transformators T angeschlossen, die sich zwischen Knotenpunkten A und B befindet. Die Resonanzkapazität CRES und die Resonanzinduktivität LRES sind Elemente eines Eingangsresonanzkreises des Spannungskonverters, in den auch die Primärwicklung des Transformators T einbezogen ist.

Der Transformator T weist zwei Sekundärwicklungen auf, von denen eine erste an Knotenpunkte H und V und eine zweite an Knotenpunkte J und K geführt ist. Der Transformator T ist an den Knotenpunkten H und V zum Liefern einer Wechselspannung hoher Amplitude und an den Knotenpunkten J und K zum Liefern einer weiteren Wechselspannung dimensioniert. Die erste Sekundärwicklung zwischen den Knotenpunkten H und V wird daher auch als Hochspannungswicklung bezeichnet. Die weitere Wechselspannung an der zweiten Sekundärwicklung zwischen den Knotenpunkten J und K hat eine wesentlich niedrigere Amplitude; im Gegensatz zu der Wechselspannung hoher Amplitude (Hochspannung) an der ersten Sekundärwicklung wird sie im folgenden auch als Niederspannung bezeichnet.

Jede der Sekundärwicklungen des Transformators T ist in einen Ausgangskreis einbezogen. Der erste Ausgangskreis, der die erste Sekundärwicklung zwischen den Knotenpunkten H und V einbezieht, ist zum Liefern der hohen Gleichspannung ausgelegt, und der zweite Ausgangskreis, der die zweite Sekundärwicklung zwischen den Knotenpunkten J und K einbezieht, ist zum Liefern der weiteren Versorgungsspannung ausgelegt. Der erste Ausgangskreis umfaßt in dem in Fig. 1 dargestellten Spannungskonverter einen Spannungsvervielfacher 7, dessen Ausgang mit einer Lastkapazität CL2 verbunden ist, an der sich im Betrieb die hohe Gleichspannung einstellt. Zwischen den Knotenpunkten H und V ist eine Parallelkapazität CP eingefügt, die je nach Auslegung des Spannungskonverters durch die parasitäre Wicklungskapazität der ersten Sekundärwicklung des Transformators T im erste Ausgangskreis oder durch ein gesondertes Bauelement gebildet sein.

Der die zweite Sekundärwicklung einbeziehende Ausgangskreis des Spannungskonverters nach Fig. 1 umfaßt einen Brückengleichrichter, der vier Dioden D1, D2, D3 und D4 enthält. Dieser Brückengleichrichter ist ausgangsseitig mit einer Lastkapazität CL3 verbunden, an der sich im Betrieb die weitere Versorgungsspannung einstellt.

In der Darstellung nach Fig. 1 ist zwischen den Knotenpunkten J und K keine Kapazität eingetragen. Durch die Wahl des Übersetzungsverhältnisses zwischen der zweiten Sekundärwicklung zwischen den Knotenpunkten J und K und der Primärwicklung zwischen den Knotenpunkten A und B einerseits sowie des Übersetzungsverhältnisses zwischen der ersten Sekundärwicklung zwischen den Knotenpunkten H und V und der Primärwicklung andererseits ergibt sich bei diesem dargestellten Spannungskonverter, daß der Einfluß einer parasitären Wicklungskapazität der zweiten Sekundärwicklung, transformiert zur Primärseite des Transformators T, gegenüber der Parallelkapazität CP vernachlässigbar ist.

Zur Erläuterung der Wirkungsweise des Spannungskonverters nach Fig. 1 ist in Fig. 2 ein Ersatzschaltbild für den Transformator T dargestellt. Dieses umfaßt zwischen den Knotenpunkten A und B als Ersatzschaltbild für die Primärwicklung eine Reihenschaltng aus einer primären Streuinduktivität LS1 mit einer Parallelschaltung einer Hauptinduktivität LH des Transformators T und einer Primärwicklung 1 eines idealen Transformators. Sekundärseitig umfaßt das Ersatzschaltbild gemäß Fig. 2 für die erste Sekundärwicklung die Wicklung 2 des idealen Transformators in Reihe mit einer sekundärseitigen Streuinduktivität LS2 zwischen den Knotenpunkten H und V und entsprechend eine Reihenschaltung einer weiteren Sekundärwicklung 3 des idealen Transformators mit ihrer zugehörigen sekundärseitigen Streuinduktivität LS3 zwischen den Knotenpunkten J und K. Aus den technischen Daten des zu verwendenden Transformators T lassen sich die Werte für die Streuinduktivitäten jeweils eindeutig bestimmen. In das Ersatzschaltbild der Fig. 2 ist ferner die Parallelkapazität CP zur ersten Sekundärwicklung 2 zwischen den Knotenpunkten H und V eingezeichnet.

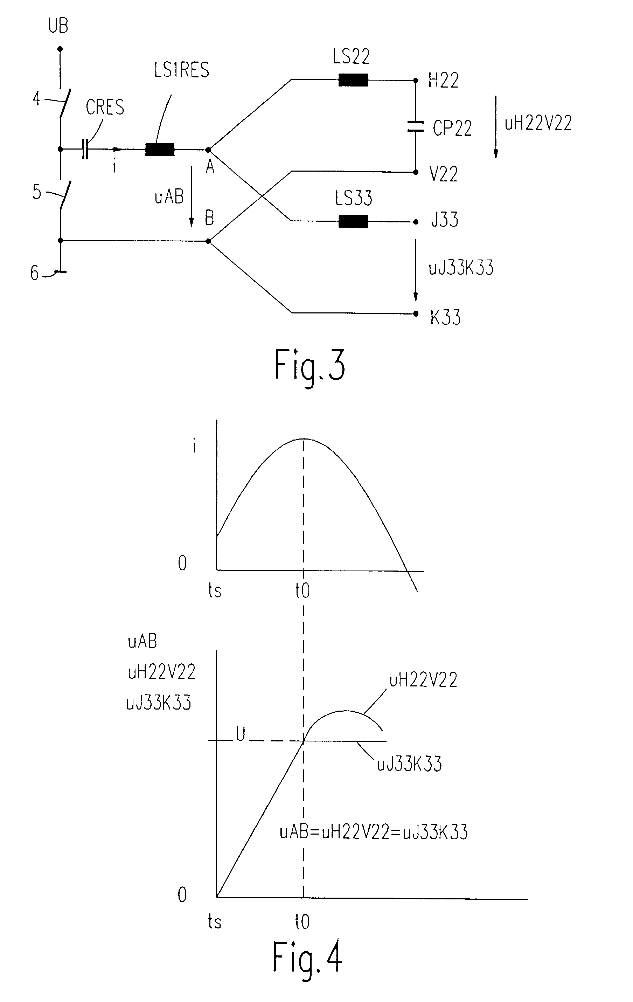

Zur Erläuterung des Problems der "Crossregulation" ist in Fig. 3 eine weitere Vereinfachung des Ersatzschaltbildes des Transformators T zusammen mit den wichtigsten sonstigen Elementen des Spannungskonverters aus Fig. 1 dargestellt. Die Vereinfachung des Ersatzschaltbildes besteht darin, daß die sekundärseitigen Elementen des Transformators T mit den zugehörigen Übersetzungsverhältnissen auf die Primärseite des Transformators T umgerechnet sind, so daß sich ein vereinfachtes, galvanisch gekoppeltes Ersatzschaltbild ergibt. Darin sind bereits beschriebene Elemente mit übereinstimmenden Bezugszeichen versehen. Mit LS22 ist die sekundärseitige Streuinduktivität LS2, transformiert auf die Primärseite, bezeichnet. Entsprechend bezeichnet LS33 die sekundärseitige Streuinduktivität LS3, transformiert auf die Primärseite des Transformators T. Mit CP22 ist die Parallelkapazität CP in ihrer auf die Primärseite des Transformators T transformierten Form benannt. Entsprechend bezeichnen H22, V22, J33 und K33 die den Knotenpunkten H, V, J bzw. K entsprechenden Knotenpunkte der transformierten Schaltung. Im Betrieb des Spannungskonverters nach Fig. 1 ergeben sich für das Ersatzschaltbild der Fig. 3 zwischen den Knotenpunkten A und B die Spannung uAB, zwischen den Knotenpunkten H22 und V22 die Spannung uH22V22 und zwischen den Knotenpunkten J33 und K33 die Spannung uJ33K33. Der Primärkreis des Spannungskonverters, d.h. der Eingangsresonanzkreis mit der Primärwicklung des Transformators T, ist in Fig. 3 weiter vereinfacht worden. So ist die Streuinduktivität LS1 mit der Resonanzinduktivität LRES zu einer resultierenden Resonanzinduktivität LS1RES zusammengefaßt worden. Da die Hauptinduktivität LH in der Regel als hochohmig betrachtet werden kann, ist sie in Fig. 3 nicht dargestellt. Im Eingangsresonanzkreis fließt im Betrieb ein Strom i.

Fig. 4 zeigt für den Betrieb des Spannungskonverters nach Fig. 1 die im Ersatzschaltbild der Fig. 3 eingetragenen Spannungen und den Strom i im Eingangsresonanzkreis. Die Darstellung beginnt zu einem Zeitpunkt ts, an dem die transformierte Parallelkapazität CP22 vollständig entladen ist. Entsprechend ist die Spannung uH22V22 zum Zeitpunkt ts gleich Null. Bei einer verhältnismäßig kleinen transformierten Streuinduktivität LS22 und langsamer Änderung des Stromes i kann die an der transformierten Streuinduktivität LS22 entstehende Spannung in erster Näherung vernachlässigt werden. Somit stimmt in erster Näherung die Spannung uAB in diesem Betriebszustand mit der Spannung uH22V22 überein. Beide steigen, beginnend zum Zeitpunkt ts von Null beginnend an. In diesem Betriebszustand ist der Brückengleichrichter D1, D2, D3, D4 noch gesperrt, im zweiten Ausgangskreis über die Knotenpunkte J33, K33 fließt noch kein Strom und die Spannung uJ33K33 folgt dem zeitlichen Verlauf der Spannung uAB unmittelbar. Der Strom i fließt vollständig in die Parallelkapazität CP22 und lädt diese auf.

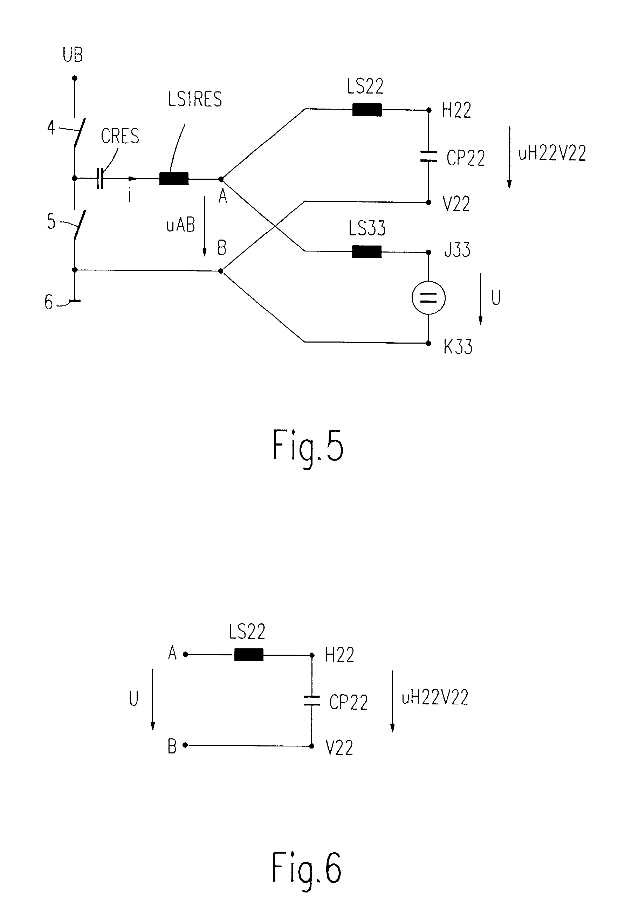

Der geschilderte Betriebszustand ändert sich zum Zeitpunkt t0, an dem die Parallelkapazität CP22 so weit aufgeladen ist, daß die Spannung uAB und damit die Spannung uJ33K33 einen Wert U erreichen, der die weitere Versorgungs-Gleichspannung darstellt, auf die im Betrieb die Lastkapazität CL3 aufgeladen ist, transformiert auf die Primärseite des Transformators T. Zum Zeitpunkt t0 wird somit der Brückengleichrichter D1, D2, D3, D4 leitend, und die Spannung uJ33K33 verharrt auf dem Wert U. Das Ersatzschaltbild für diesen Betriebsfall zeigt Fig. 5, in der im übrigen bereits erläuterte Elemente mit übereinstimmenden Bezugszeichen versehen sind.

Wird im Ersatzschaltbild der Fig. 5 auch die an der transformierten Streuinduktivität LS33 entstehende Spannung vernachlässig, verharrt die Spannung uAB vom Zeitpunkt t0 an auf dem Wert U. Bei einem Spannungskonverter ohne den Effekt der "Crossregulation" würde auch die Spannung uH22V22 vom Zeitpunkt t0 an auf dem Wert U beharren. Es zeigt sich jedoch, daß auch nach dem Zeitpunkt t0 die Spannung an der (transformierten) Parallelkapazität CP22 weiter ansteigt. Dieser Verlauf ist in Fig. 4 dargestellt.

Zur Erläuterung des Ansteigens der Spannung uH22V22 ist in Fig. 6 ein Ausschnitt aus dem Ersatzschaltbild der Fig. 3 dargestellt, worin die bereits beschriebenen Elemente wieder mit übereinstimmenden Bezugszeichen versehen sind. Der in Fig. 6 dargestellte Ausschnitt umfaßt die transformierte sekundärseitige Streuinduktivität LS22 und die transformierte Parallelkapazität CP22. Es zeigt sich, daß diese Eelemente in der beschriebenen Betriebssituation eine Reihenschaltung aus einer Induktivität und einer Kapazität bilden, an die zum Zeitpunkt t0 ein Spannungssprung entsprechend der Spannung U angelegt wird. Die Spannung, die sich an der auf die Primärseite transformierten Parallelkapazität CP22 ausbildet, weist einen sinusförmigen Verlauf auf, dessen Amplitude proportional zum Wert des Stromes i im Eingangsresonanzkreis zum Zeitpunkt t0 und umgekehrt proportional zum Wert der transformierten Parallelkapazität CP22 ist. Außerdem ist diese Amplitude umgekehrt proportional zur Periodendauer des sinusförmigen Spannungsverlaufs, die sich wiederum aus dem Kehrwert der Quadratwurzel des Produktes aus der transformierten Parallelkapazität CP22 und der transformierten Streuinduktivität LS22 bestimmt. Die Spannungsüberhöhung, d.h. die Amplitude des sinusförmigen Verlaufes der Spannung uH22V22 nach dem Zeitpunkt t0, wie in Fig. 4 abgebildet, ist somit proportional zum Strom i im Eingangsresonanzkreis und damit gemäß dem Ersatzschaltbild der Fig. 3 in der transformierten, sekundären Streuinduktivität LS22 zum Zeitpunkt t0 sowie proportional zur Quadratwurzel dieser transformierten Streuinduktivität LS22 und umgekehrt proportional zur Quadratwurzel der transformierten Parallelkapazität CP22. Diese Spannungsüberhöhung bewirkt eine störende "Crossregulation".

Da der Strom durch die transformierte Streuinduktivität LS22 zum Zeitpunkt t0 dem Strom i im Eingangsresonanzkreis entspricht, wird er bestimmt durch die aufgenommene Leistung des Spannungskonverters und durch dessen Dimensionierung. Die Abhängigkeit der Spannungsüberhöhung von den Elementen des Spannungskonverters in der beschriebenen Form könnte zu dem Versuch führen, den Wert der Parallelkapazität CP zu vergrößern oder die Streuinduktivität LS2 zu verkleinern. Eine Verringerung der Spannungsüberhöhung wird jedoch dadurch nicht erreicht, da eine Vergrößerung der Parallelkapazität CP unmittelbar eine Vergrößerung des Stromes i zum Zeitpunkt t0 nach sich zieht. Weiterhin sind einer Verringerung der Streuinduktivität LS2 wie eingangs erläutert enge Grenzen gesetzt. Ohne eine Verringerung der Spannungsüberhöhung wird jedoch auch keine Verringerung der "Crossregulation" möglich.

Die Erfindung hat nun die Aufgabe, einen Spannungskonverter der eingangs beschriebenen Art mit mehreren Ausgängen in der Weise auszubilden, daß ein verbesserter Gleichlauf der Ausgangsspannungen, d.h. eine verringerte "Crossregulation", als in herkömmlicher Weise erreichbar erzielt wird.

Erfindungsgemäß wird diese Aufgabe bei einem Spannungskonverter der gattungsgemäßen Art gelöst durch (je) eine zusätzliche Kapazität parallel zur Sekundärwicklung des Transformators in dem (bzw. den) die Gleichrichteranordnung(en) aufweisenden übrigen Ausgangskreis(en), wobei die zusätzliche(n) Kapazität(en) derart bemessen ist (bzw. sind), daß ihr(e) auf die Primärseite des Transformators transformierter Wert (bzw. transformierten Werte in Summe) im wesentlichen mit dem auf die Primärseite transformierten Wert einer Parallelkapazität der Sekundärwicklung des Transformators aus dem ersten Ausgangskreis übereinstimmt.

Bei dem erfindungsgemäßen Spannungskonverter können die Ausgangskreise entweder an verschiedene Anzapfungen einer Sekundärwicklung oder an für einzelne Ausgangskreise oder Gruppen von Ausgangskreisen galvanisch getrennte Sekundärwicklungen angeschlossen sein. Je nach bevorzugter Dimensionierung des Spannungskonverters kann die Parallelkapazität aus dem ersten Ausgangskreis durch eine parasitäre Wicklungskapazität, durch ein gesondertes kapazitives Bauelement oder durch eine Kombination aus beiden gebildet sein.

Durch die zusätzliche Kapazität bzw. die zusätzlichen Kapazitäten in wenigstens einem der übrigen Ausgangskreise wird der Strom i im Eingangsresonanzkreis von der Parallelkapazität ausschließlich im ersten Ausgangskreis auf wenigstens einen weiteren Ausgangskreis verteilt. Dadurch wird der Strom in der Streuinduktivität LS2 bzw. LS22 im ersten Ausgangskreis zum Zeitpunkt t0 vermindert. Diese Verminderung überwiegt auch eine Vergrößerung des Stromes i durch die Zunahme der kapazitiven Belastung auf der Sekundärseite des Transformators T. Insgesamt wird somit die Spannungsüberhöhung verringert, ohne die Werte für die Streuinduktivität LS22 oder die Parallelkapazität CP22 zu verändern. Durch die erfindungsgemäße Ausbildung des Spannungskonverters läßt sich eine Verringerung der "Crossregulation" von etwa 30 % erreichen. Dies ist mit einem sehr geringen zusätzlichen Schaltungsaufwand möglich.

Die Aufgabe wird bei einem Spannungskonverter der gattungsgemäßen Art ferner gelöst durch (je) einen Hilfskreis in dem (bzw. den) die Gleichrichteranordnung(en) aufweisenden übrigen Ausgangskreis(en), wobei
- jeder Hilfskreis eine zusätzliche Sekundärwicklung des Transformators umfaßt, die mit einem zusätzlichen Kondensator und einer zusätzlichen Gleichrichteranordnung in einer Reihenschaltung angeordnet ist und
- diese Reihenschaltung parallel zu einem Zweig der Gleichrichteranordnung des betreffenden Ausgangskreises sowie einer mit diesem verbundenen Last angeordnet ist.

Durch diese erfinderische Ausbildung des Spannungskonverters ist es möglich, den Strom durch die sekundärseitige Streuinduktivität der ersten Sekundärwicklung (Hochspannungswicklung) des Transformators zu Beginn der Spannungsüberhöhung - vgl. Zeitpunkt t0 in Fig. 4 - zu Null zu erzwingen. Da die Spannungsüberhöhung proportional zu diesem Strom ist, kann sie ebenfalls zu Null gemacht werden. Damit kann die "Crossregulation" wenigstens weitgehend beseitigt werden. Um dies zu erreichen, ist wenigstens einem der übrigen Ausgangskreise des Spannungskonverters je ein Hilfskreis zugeordnet, der mit seiner zusätzlichen Sekundärwicklung des Transformators und seinem zusätzlichen Kondensator ein schwingfähiges Schaltungsgebilde formt. Dieses ist über eine zusätzliche Gleichrichteranordnung mit der Gleichrichteranordnung des zugeordneten Ausgangskreises und der daran angeschlossenen Last derart verbunden, daß in der zusätzlichen Sekundärwicklung des Transformators zu Beginn der Spannungsüberhöhung ein Strom auftritt, der in Konkurrenz zu dem Strom durch die Streuinduktivität der Sekundärwicklung des Ausgangskreises tritt. Durch eine entsprechende Dimensionierung der zusätzlichen Sekundärwicklung und des zusätzlichen Kondensators des Hilfskreises (bzw. der Hilfskreise, sofern mehrere Ausgangskreise vorhanden sind und von ihnen mehrere mit je einem Hilfskreis ausgestattet sind) kann erreicht werden, daß der Strom in der sekundärseitigen Streuinduktivität der Sekundärwicklung des Ausgangskreises zu Beginn der Spannungsüberhöhung zu Null wird. Dadurch wird die Spannungsüberhöhung und somit auch die durch sie verursachte Crossregulation wenigstens nahezu vollständig unterbunden. Die zusätzliche Gleichrichteranordnung bewirkt, daß im Hilfskreis nur in der zeitlichen Umgebung des Beginns der Spannungsüberhöhung ein Strom fließt. Zu diesem Zweck ist die vom Hilfskreis umfaßte Reihenschaltung aus zusätzlicher Sekundärwicklung, zusätzlichem Kondensator und zusätzlicher Gleichrichteranordnung ferner parallel zu einem Zweig der Gleichrichteranordnung des betreffenden Ausgangskreises und der mit diesem verbundenen Last angeordnet. Durch einen Vergleich der Spannung an dieser Last mit der im Hilfskreis auftretenden Spannung ist sichergestellt, daß der Stromfluß im Hilfskreis zu Beginn der Spannungsüberhöhung auftritt.

Vorzugsweise kann parallel zu oder in Reihe mit dem zusätzlichen Kondensator im Hilfskreis ein Abstimmwiderstand angeordnet sein, mit dem die Amplitude des Stromes im Hilfskreis auf einen Wert abgestimmt werden kann, durch den eine möglichst vollständige Aufhebung der Crossregulation erreicht wird.

Erfindungsgemäß läßt sich somit durch einen wenig erhöhten Schaltungsaufwand eine "Crossregulation" wenigstens weitgehend ausschließen.

In einer vorteilhaften Weiterbildung dieses erfindungsgemäßen Spannungskonverters ist die zusätzliche Gleichrichteranordnung bzw. sind die zusätzlichen Gleichrichteranordnungen als Brückengleichrichter ausgebildet. Ein solcher Brückengleichrichter ist bevorzugt gleichwirkend wie die Gleichrichteranordnung des zugeordneten Ausgangskreises mit dessen Last verbunden.

In einer weiteren Ausgestaltung des erfindungsgemäßen Spannungskonverters ist (bzw. sind) die Gleichrichteranordnung(en) des Ausgangskreises (bzw. der Ausgangskreise) ebenfalls als Brückengleichrichter ausgebildet. Ein Teil der Elemente des Brückengleichrichters eines Ausgangskreises ist zugleich Teil der zusätzlichen Gleichrichteranordnung desselben Ausgangskreises.

Spannungskonverter der erfinderischen Art sind vorteilhaft in elektrischen Geräten aller Art einsetzbar, in denen mehrere Lasten aus einer Energiequelle gespeist werden, wobei eine der Lasten mit einer gegenüber den übrigen Lasten höheren elektrischen Spannung zu versorgen ist. Insbesondere ist der erfindungsgemäße Spannungskonverter geeignet für den Einsatz in netzgespeisten Geräten wie Monitoren, Fernsehempfängern oder dergleichen.

Ausführungsbeispiele der Erfindung sind in den Fig. 7 bis 10 der Zeichnung dargestellt und werden im nachfolgenden näher erläutert. Bereits beschriebene Elemente sind weiterhin mit übereinstimmenden Bezugszeichen versehen. Es zeigen:
Fig. 7 ein schematisches Schaltbild eines ersten Ausführungsbeispiels eines erfindungsgemäßen Spannungskonverters,
Fig. 8 ein schematisches Schaltbild eines zweiten Ausführungsbeispiels eines erfindungsgemäßen Spannungskonverters,
Fig. 9 Strom- und Spannungsverläufe im Ausführungsbeispiel gemäß Fig. 8 und
Fig. 10 eine Abwandlung des zweiten Ausführungsbeispiels nach Fig. 8.

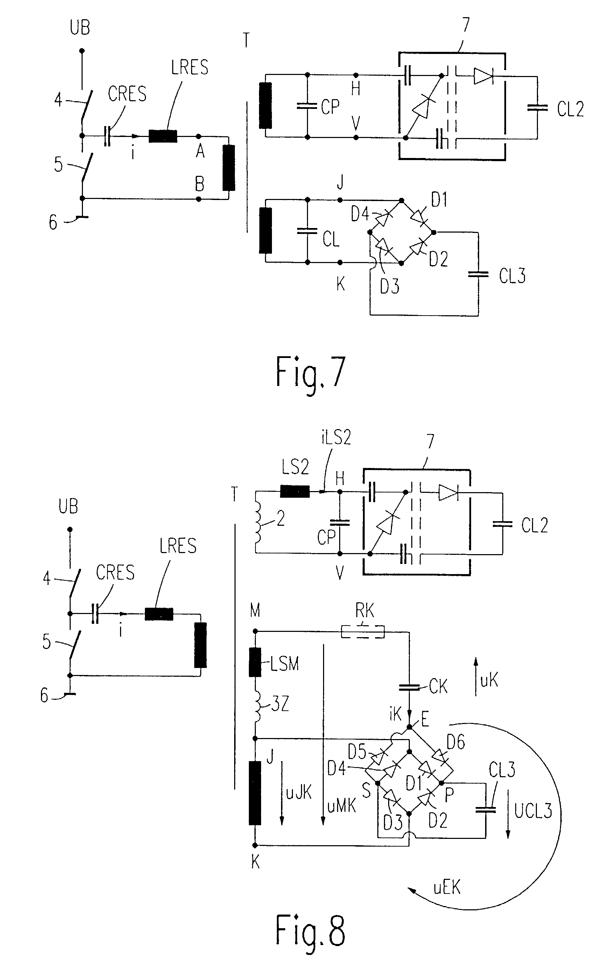

Fig. 7 zeigt eine Schaltungsanordnung für einen Spannungskonverter, die weitestgehend der Schaltungsanordnung nach Fig. 1 entspricht. Insoweit wird auf die Beschreibung zu Fig. 1 verwiesen.

Gegenüber der Schaltungsanordnung nach Fig. 1 enthält das Ausführungsbeispiel der Fig. 7 eine zusätzliche Kapazität CL, welche im mit der zweiten Sekundärwicklung des Transformators T verbundenen Ausgangskreis zwischen den Knotenpunkten J und K parallel zur Sekundärwicklung angeordnet ist. Diese zusätzliche Kapazität CL ist derart bemessen, daß ihr mit dem Übersetzungsverhältnis zwischen der zweiten Sekundärwicklung (Niederspannungswicklung) und der Primärwicklung des Transformators T auf dessen Primärseite umgerechneter Kapazitätswert ebenso groß ist wie der mit dem Übersetzungsverhältnis zwischen der ersten Sekundärwicklung (Hochspannungswicklung) und der Primärwicklung des Transformators T umgerechnete Kapazitätswert der Parallelkapazität CP im ersten Ausgangskreis zwischen den Knotenpunkten H und V. Der Strom i im Eingangsresonanzkreis verteilt sich dann wenigstens nahezu gleichmäßig auf die beiden Ausgangskreise. Die Spannungsüberhöhung reduziert sich damit um etwa 30 %.

In Fig. 8 ist ein zweites Ausführungsbeispiel für einen erfindungsgemäßen Spannungskonverter dargestellt, welches sich ebenfalls an den Spannungskonverter gemäß Fig. 1 anlehnt. Gegenüber Fig. 1 weist die Schaltungsanordnung nach Fig. 8 zu dem mit der zweiten Sekundärwicklung verbundenen Ausgangskreis einen Hilfskreis auf. Dieser Hilfskreis umfaßt eine zusätzliche Sekundärwicklung, die ebenfalls auf den Kern des Transformators T aufgebracht und einseitig mit dem Knotenpunkt J verbunden ist. Der zweite Anschluß dieser zusätzlichen Sekundärwicklung bildet einen weiteren Knotenpunkt M. Der weitere Knotenpunkt M ist über einen zusätzlichen Kondensator CK und gegebenenfalls einen dazu in Reihe angeordneten Abstimmwiderstand RK mit einem Knotenpunkt E verbunden, der einen Anschlußpunkt einer zusätzlichen Gleichrichteranordnung bildet. Diese zusätzliche Gleichrichteranordnung umfaßt die Dioden D2 und D3 der Gleichrichteranordnung des Ausgangskreises sowie zwei weitere Dioden D5 und D6 und ist - wie die Gleichrichteranordnung des Ausgangskreises - als Brückengleichrichter ausgebildet. Dabei bilden die Knotenpunkte E und K Wechselspannungs-Eingangsanschlüsse der zusätzlichen Gleichrichteranordnung. Die Knotenpunkte J und K bilden Wechselspannungs-Eingangsanschlüsse der Gleichrichteranordnung D1, D2, D3, D4 des Ausgangskreises, und die Lastkapazität CL3 dieses Ausgangskreises, an der die weitere Versorgungs-Gleichspannung U abgegriffen werden kann, ist mit Knotenpunkten P und S verbunden, die die Gleichspannungs-Ausgangsanschlüsse sowohl der zusätzlichen Gleichrichteranordnung D2, D3, D5, D6 als auch der Gleichrichteranordnung D1, D2, D3, D4 des Ausgangskreises bilden. Dabei ist die Diode D1 zwischen den Knotenpunkten J und P, D2 zwischen P und K, D3 zwischen K und S, D4 zwischen S und J, D5 zwischen S und E sowie D6 zwischen E und P angeordnet. D2 und D3 sind somit Elemente sowohl der Gleichrichteranordnung des Ausgangskreises als auch der zusätzlichen Gleichrichteranordnung.

In Fig. 8 ist mit LSM die Streuinduktivität der zusätzlichen Sekundärwicklung zwischen den Knotenpunkten M und J bezeichnet; mit 3Z ist in der Ersatzschaltbild-Darstellung der Fig. 8 die ideale zusätzliche Sekundärwicklung des Transformators T benannt, die mit der Streuinduktivität LSM zwischen den Knotenpunkten M und J in Reihe geschaltet ist. Entsprechend ist auch für die erste Sekundärwicklung 2 und ihre Streuinduktivität LS2 in Fig. 8 eine Ersatzschaltbild-Darstellung gewählt worden.

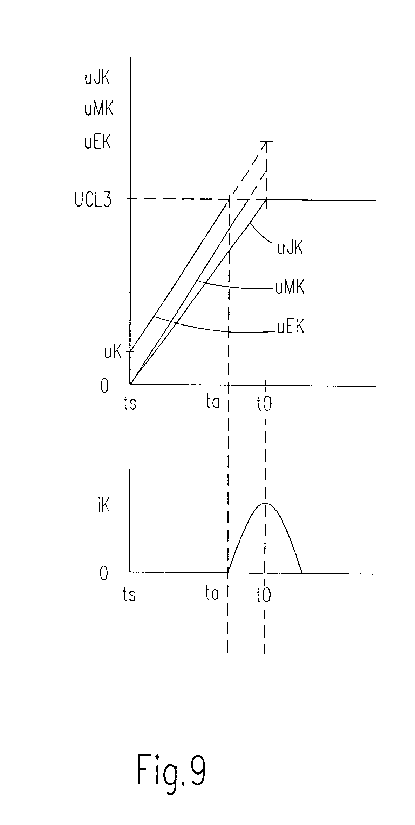

Zur Darstellung der Funktionsweise des Ausführungsbeispiels nach Fig. 8 wird auf Fig. 9 Bezug genommen. Im eingeschwungenen Betriebszustand der Schaltungsanordnung nach Fig. 8 bildet sich an den Anschlüssen des zusätzlichen Kondensators CK zu dem in Fig. 4 bereits dargestellten Zeitpunkt ts eine Gleichspannung uK heraus, die etwa gleich dem Spitzenwert der Spannung über der zusätzlichen Sekundärwicklung zwischen den Knotenpunkten M und J ist und eine Polarität aufweist, die den aktuellen Wert der Spannung uMK zwischen den Knotenpunkten M und K vergrößert. Die Polarität der Spannung uK am zusätzlichen Kondensator CK ist dabei bedingt durch den Strom, der durch diesen zusätzlichen Kondensator CK in der vorangegangenen halben Periode des Stromes i im Eingangsresonanzkreis bzw. der Spannung uAB geflossen ist. Im oberen Teil der Fig. 9 ist der Verlauf der Spannung uMK für den Beginn einer Halbwelle aufgetragen, in dem das Potential am Knotenpunkt M gegenüber dem Potential am Knotenpunkt K laufend ansteigt. Mit uJK ist die Spannung zwischen den Knotenpunkten J und K bezeichnet, d.h. die an der Sekundärwicklung des Ausgangskreises sich bildende Spannung. Gegenüber dieser ist die Spannung uMK um das Verhältnis der Anzahlen der Windungen zwischen den Knotenpunkten M und K einerseits und den Knotenpunkten J und K andererseits proportional vergrößert. Die Spannung uEK zwischen den Knotenpunkten E und K, die sich aus der Summe der Spannungen uK und uMK zusammensetzt, ist gegenüber dem Verlauf der Spannung uMK um die Gleichspannung uK verschoben.

Die Spannung uEK steigt mit der Spannung uMK an, bis sie zu einem Zeitpunkt ta den Wert der weiteren Versorgungs-Gleichspannung UCL3 an der Lastkapazität CL3 erreicht. Die Spannung UCL3 wird durch Transformieren auf die Primärseite des Transformators T mit dem zugehörigen Übersetzungsverhältnis zu der bereits beschrieben Spannung U. Unter Vernachlässigung der Diodenflußspannungen der Dioden D3 und D6 setzt zum Zeitpunkt ta ein Strom iK durch den zusätzlichen Kondensator CK und damit durch den Hilfskreis ein, der eine Schwingung bildet, deren Periodendauer durch die Streuinduktivität LSM der zusätzlichen Sekundärwicklung sowie durch den zusätzlichen Kondensator CK bestimmt wird. Die Amplitude dieser Schwingung wird mitbestimmt durch den Wert, den die Spannung uEK erreichen würde, wenn man ihren Verlauf vor dem Zeitpunkt ta bis zum Zeitpunkt t0 extra poliert. Der Zeitpunkt t0 ist dabei identisch mit dem in Fig. 4 dargestellten Beginn der Spannungsüberhöhung. Der Strom iK durch den zusätzlichen Kondensator CK ist im unteren Teil der Fig. 9 dargestellt und bildet eine Wellenform mit einem halbsinusähnlichen Verlauf, dessen Maximum nach einem Viertel der Periodendauer der genannten Schwingung, gerechnet vom Zeitpunkt ta an, auftritt.

Bei entsprechender Wahl der Dimensionierung für die zusätzliche Sekundärwicklung und ihre Streuinduktivität LSM sowie den zusätzlichen Kondensator CK kann nun erreicht werden, daß sich die halbsinusähnliche Welle der beschriebenen Schwingung über ein Zeitintervall erstreckt, welches den Zeitpunkt t0, d.h. den Beginn der Spannungsüberhöhung einschließt. Zu diesem Zeitpunkt t0 fließt dann, hervorgerufen durch den Strom i im Eingangsresonanzkreis, außer dem Strom in der ersten Sekundärwicklung (Hochspannungswicklung) des Transformators T, der in Fig. 8 als iLS2 eingetragen ist, auch der Strom iK in der zusätzlichen Sekundärwicklung und dem zusätzlichen Kondensator CK. Zum Zeitpunkt t0 entsteht somit eine Konkurrenz zwischen den Strompfaden für die Ströme iLS2 und iK. Durch entsprechende Auslegung und Wahl der zusätzlichen Sekundärwicklung zwischen den Knotenpunkten M und J, ihrer Streuinduktivität LSM und des Kondensators CK kann erreicht werden, daß zum Zeitpunkt t0 der Strom iLS2 durch die sekundärseitige Streuinduktivität LS2 verschwindet. Vorzugsweise wird diese Dimensionierung derart vorgenommen, daß der Strom iK zum Zeitpunkt t0 sein Maximum annimmt, daß somit das Zeitintervall zwischen den Zeitpunkten t0 und ta gerade einem Viertel der Periodendauer der durch den Hilfskreis fließenden Schwingung entspricht. Bei dieser Dimensionierung kann zur Feinabstimmung ein Abstimmwiderstand RK mit dem zusätzlichen Kondensator RK in Reihe geschaltet werden. Dieser Abstimmwiderstand RK ist in Fig. 8 gestrichelt dargestellt und kann wahlweise parallel zum zusätzlichen Kondensator CK angeordnet sein.

Mit dieser Dimensionierung, bei der der Strom iLS2 und damit der daraus durch Transformation auf die Primärseite des Transformators T gewonnene Strom durch die transformierte Streuinduktivität LS22 im Ersatzschaltbild nach Fig. 3 zum Zeitpunkt t0 verschwindet, kann auch die Spannungsüberhöhung, die proportional zu den genannten Strömen ist, zu Null gemacht werden. Dadurch läßt sich die von der Spannungsüberhöhung ausgelöste "Crossregulation" beseitigen.

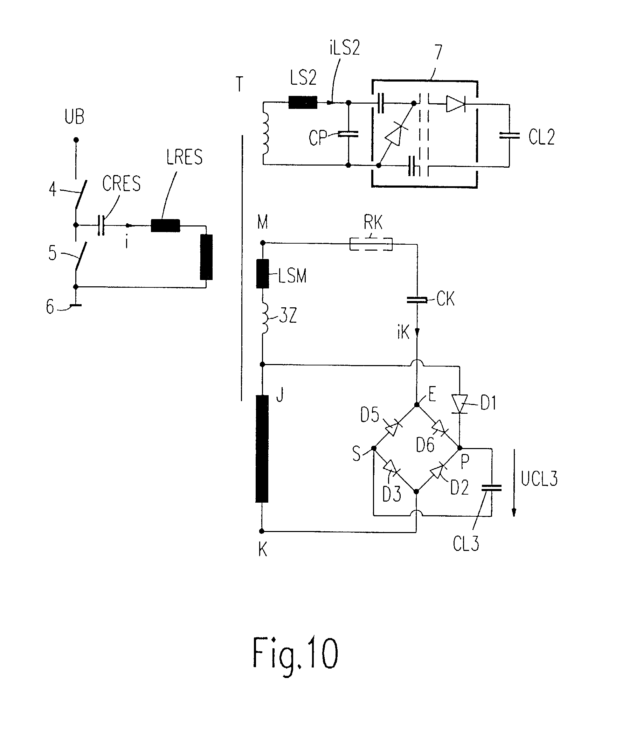

Fig. 10 zeigt ein weiteres Ausführungsbeispiel der Erfindung, welches durch eine Abwandlung der Schaltungsanordnung nach Fig. 8 entstanden ist. Gegenüber Fig. 8 ist in Fig. 10 die Diode D4 weggelassen worden, die Diode D1 bildet ohne den Hilfskreis einen Einweggleichrichter für die von den Knotenpunkten J und K gelieferte Wechselspannung zur Bildung der Gleichspannung UCL3 über der Lastkapazität CL3. Der Hilfskreis für diese Anordnung mit der zusätzlichen Sekundärwicklung zwischen den Knotenpunkten M und J, dem zusätzlichen Kondensator CK und dem zusätzlichen Brückengleichrichter aus den Dioden D2, D3, D5 und D6 sowie gegebenenfalls mit dem Abstimmwiderstand RK ist mit dem in Fig. 8 gezeigten Hilfskreis identisch.

Die Ausführungsbeispiele nach Fig. 8 und Fig. 10 können durch weitere Sekundärwicklungen und daran angeschlossene Ausgangskreis erweitert werden, wobei diese Ausgangskreise wahlweise mit weiteren Hilfskreisen ausgestattet werden können.

Durch die Erfindung wird insgesamt eine bedeutende Verbesserung des Gleichlaufs der Ausgangsspannungen der Ausgangskreise des Spannungskonverters erreicht. Dadurch wird derartigen Spannungskonvertern ein breites Anwendungsfeld für Geräte erschlossen, bei denen hohe Anforderungen an den Gleichlauf gestellt werden, beispielsweise für Monitore und Fernsehempfänger.

## Patentansprüche

1. Spannungskonverter zum Konvertieren einer Eingangsspannung in wenigstens zwei Ausgangsspannungen, umfassend
- einen Eingangsresonanzkreis, in den eine Primärwicklung eines Transformators einbezogen ist und dem die Eingangsspannung in periodisch wiederkehrenden Zeitintervallen zuführbar ist,
- wenigstens zwei Ausgangskreise, in die je eine Sekundärwicklung oder ein Teil einer Sekundärwicklung des Transformators einbezogen ist und denen je eine der Ausgangsspannungen entnehmbar ist, wobei
- - eine von einem ersten der Ausgangskreise gelieferte erste der Ausgangsspannungen eine Hochspannung und die übrige(n) Ausgangsspannung(en) (eine) demgegenüber niedrige Spannung(en) bildet (bzw. bilden),
-- wenigstens (einer) der die übrige(n) Ausgangsspannung(en) liefernde(n) übrige(n) Ausgangskreis(e) eine Gleichrichteranordnung zum Liefern einer Gleichspannung als Ausgangsspannung aufweist,
gekennzeichnet durch
(je) eine zusätzliche Kapazität parallel zur Sekundärwicklung des Transformators in dem (bzw. den) die Gleichrichteranordnung(en) aufweisenden übrigen Ausgangskreis(en), wobei die zusätzliche(n) Kapazität(en) derart bemessen ist (bzw. sind), daß ihr(e) auf die Primärseite des Transformators transformierter Wert (bzw. transformierten Werte in Summe) im wesentlichen mit dem auf die Primärseite transformierten Wert einer Parallelkapazität der Sekundärwicklung des Transformators aus dem ersten Ausgangskreis übereinstimmt.

2. Spannungskonverter zum Konvertieren einer Eingangsspannung in wenigstens zwei Ausgangsspannungen, umfassend
- einen Eingangsresonanzkreis, in den eine Primärwicklung eines Transformators einbezogen ist und dem die Eingangsspannung in periodisch wiederkehrenden Zeitintervallen zuführbar ist,
- wenigstens zwei Ausgangskreise, in die je eine Sekundärwicklung oder ein Teil einer Sekundärwicklung des Transformators einbezogen ist und denen je eine der Ausgangsspannungen entnehmbar ist, wobei
- - eine von einem ersten der Ausgangskreise gelieferte erste der Ausgangsspannungen eine Hochspannung und die übrige(n) Ausgangsspannung(en) (eine) demgegenüber niedrige Spannung(en) bildet (bzw. bilden),
-- wenigstens (einer) der die übrige(n) Ausgangsspannung(en) liefernde(n) übrige(n) Ausgangskreis(e) eine Gleichrichteranordnung zum Liefern einer Gleichspannung als Ausgangsspannung aufweist,
gekennzeichnet durch
(je) einen Hilfskreis in dem (bzw. den) die Gleichrichteranordnung(en) aufweisenden übrigen Ausgangskreis(en), wobei
- jeder Hilfskreis eine zusätzliche Sekundärwicklung des Transformators umfaßt, die mit einem zusätzlichen Kondensator und einer zusätzlichen Gleichrichteranordnung in einer Reihenschaltung angeordnet ist und
- diese Reihenschaltung parallel zu einem Zweig der Gleichrichteranordnung des betreffenden Ausgangskreises sowie einer mit diesem verbundenen Last angeordnet ist.

3. Spannungskonverter nach Anspruch 2, dadurch gekennzeichnet,
daß die zusätzliche(n) Gleichrichteranordnung(en) als Brückengleichrichter ausgebildet ist (sind).

4. Spannungskonverter nach Anspruch 3, dadurch gekennzeichnet,
daß die Gleichrichteranordnung(en) des Ausgangskreises (bzw. der Ausgangskreise) als Brückengleichrichter ausgebildet ist (bzw. sind) und ein Teil der Elemente des Brückengleichrichters eines Ausgangskreises zugleich Teil der zusätzlichen Gleichrichteranordnung desselben Ausgangskreises ist.

5. Elektrisches Gerät, gekennzeichnet durch
einen Spannungskonverter nach einem der Ansprüche 1 bis 4.
